# EUROPEAN PATENT APPLICATION

(11) **EP 3 073 801 A1**
(43) Date of publication of application: **28.09.2016**
(21) Application number: 15160982.3
(22) Date of filing: 26.03.2015
(51) Int. Cl.: H05B 3/50, B60H 1/22, F24H 3/04, F24H 9/18

(54) **Integrally formed heater**

(71) Applicant: Betacera Inc., New Taipei City (TW)
(72) Inventor: Wei, Chih-Chang, 239 New Taipei City (TW)
(74) Representative: dompatent von Kreisler Selting Werner - Partnerschaft von Patent- und Rechtsanwälten mbB

(57) **Abstract**

An integrally formed heater (10) includes a PTC heating unit (1), a first fin assembly (2), a second fin assembly (3), a first electrode plate(4), and a second electrode plate (5). The first fin assembly(2), disposed on one side of the PTC heating unit (1), has a first electrically conductive plate (21) attached to the PTC heating unit (1). The second fin assembly (3), disposed on the other side of the PTC heating unit (1), has a second electrically conductive plate (31) attached to the PTC heating unit (1). The first electrode plate (4) extends integrally from the first electrically conductive plate (21) and is electrically connected to the PTC heating unit (1). The second electrode plate (5) extends integrally from the second electrically conductive plate (31) and is electrically connected to the PTC heating unit (1). Thus, the integrally formed heater (10) has the features of low cost, simple assembly, reduced impedance, and stable structure.

## Description

### BACKGROUND OF THE INVENTION

### Field of the Invention

The present invention relates to a heater and, in particular, to an integrally formed heater.

### Description of Related Art

A PTC (Positive Temperature Coefficient) resistor available in the market is self-heated with a rising temperature after applied with electricity. Then, the resistance value of the PTC resistor enters a transition zone, a certain temperature range, during which the temperature value increases sharply. Therefore, the PTC resistor is widely used in many products such as thermostatic heaters, household appliances, vehicle heating systems, and circuit protection devices. Among the above products, the traditional heater comprises a PTC resistor, two electrode plates and two fin assemblies. The two electrode plates are individually attached to two sides of the PTC resistor and provide current to heat the PTC resistor. The two fin assemblies are individually attached to the two electrode plates to conduct the heat generated by the PTC resistor.

However, the electrode plates and the fin assemblies are attached to each other mostly by means of riveting or welding, which increases the manufacturing cost and the assembly process steps. Besides, if there is any defect in the riveting or welding area, the affected area is easy to break off, peel off or to cause an increase in impedance.

In view of this, the inventor pays special attention to research with the application of related theory and tries to overcome the above disadvantages regarding the above related art. Finally, the inventor proposes the invention which is a reasonable design and overcomes the above disadvantages.

### SUMMARY OF THE INVENTION

It is an objective of the present invention to provide an integrally formed heater, which uses the integral extension and forming of a first electrode plate and a first fin assembly, and the integral extension and forming of a second electrode plate and a second fin assembly such that the integrally formed heater has the features of low cost, simple assembly, reduced impedance, and stable structure.

In order to achieve the above objective, the present invention provides an integrally formed heater, which comprises a PTC heating unit, a first fin assembly, a second fin assembly, a first electrode plate, and a second electrode plate. The first fin assembly is disposed on one side of the PTC heating unit. The first fin assembly has a first electrically conductive plate attached to the PTC heating unit. The second fin assembly is disposed on the other side of the PTC heating unit. The second fin assembly has a second electrically conductive plate attached to the PTC heating unit. The first electrode plate extends integrally from the first electrically conductive plate and is electrically connected to the PTC heating unit. The second electrode plate extends integrally from the second electrically conductive plate and is electrically connected to the PTC heating unit.

The present invention also has the following effects. The integrally formed heater of the present invention further comprises a plurality of ceramic devices and a thermally conductive adhesive, which prevents the integrally formed heater from current leakage and thus enhances the operation safety thereof.

### BRIEF DESCRIPTION OF DRAWING

FIG. 1 is a perspective exploded view of the integrally formed heater of the present invention;
FIG. 2 is another perspective exploded view of the integrally formed heater of the present invention;
FIG. 3 is a perspective assembled view of the integrally formed heater of the present invention;
FIG. 4 is a schematic view of FIG. 3 to be attached with the ceramic devices around the holder; and
FIG. 5 is a cross-sectional schematic view of the integrally formed heater of the present invention.

### DETAILED DESCRIPTION OF THE INVENTION

The detailed description and technical details of the present invention will be explained below with reference to accompanying figures. However, the accompanying figures are only for reference and explanation, but not to limit the scope of the present invention.

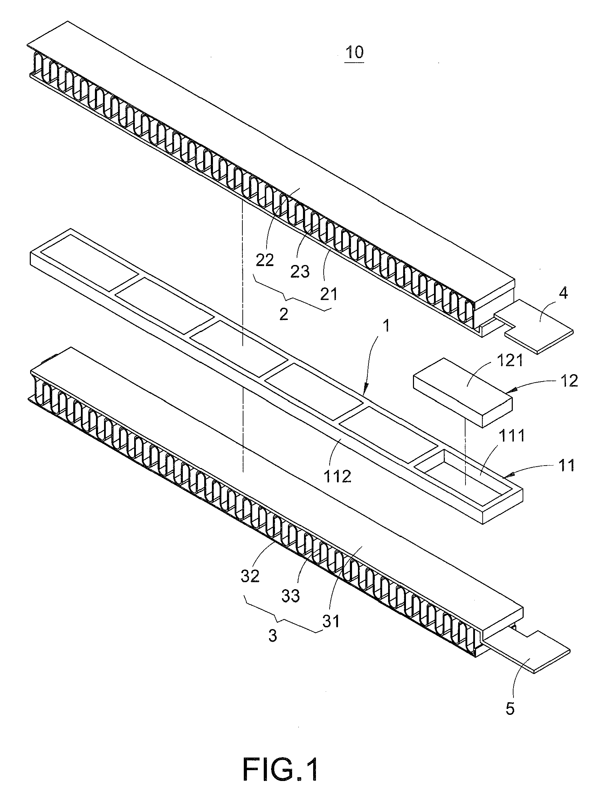

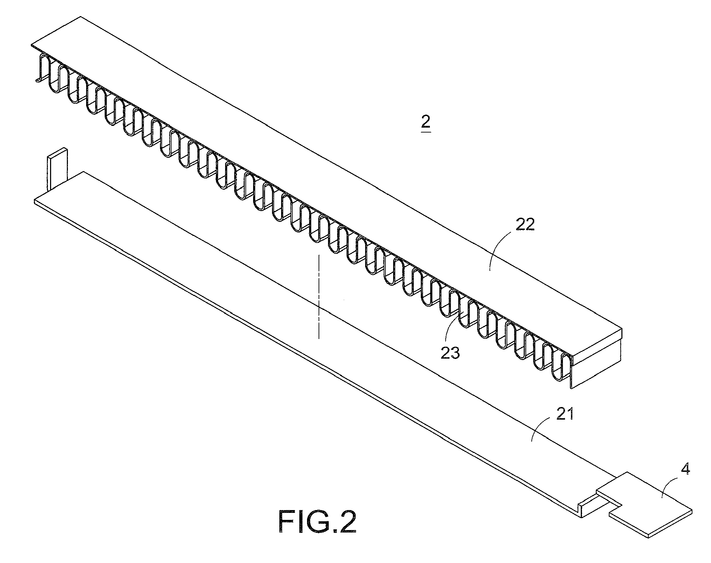

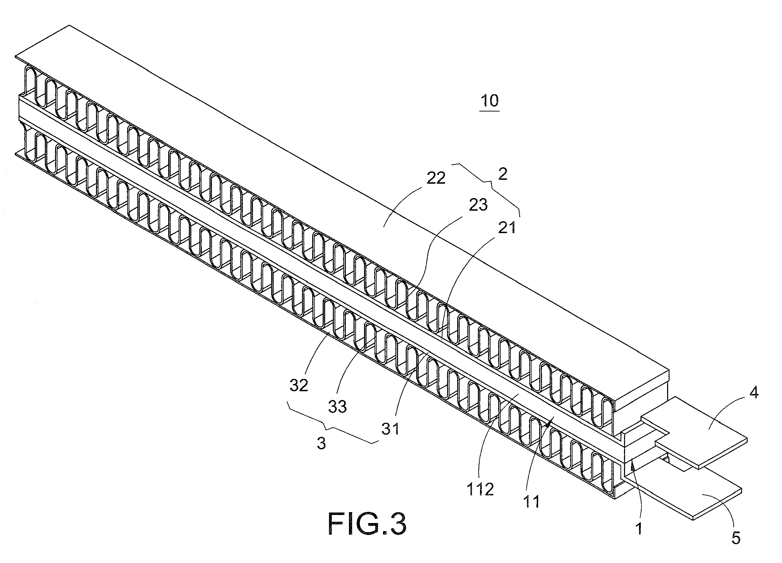

Please refer to FIGS. 1-5. The present invention provides an integrally formed heater 10, which comprises a PTC heating unit 1, a first fin assembly 2, a second fin assembly 3, a first electrode plate 4, and a second electrode plate 5.

As shown in FIGS. 1-3, and 5, the PTC heating unit 1 comprises a holder 11 and a plurality of PTC heating plates 12. The holder 11 is provided with a plurality of slots 111. The PTC heating plates 12 are individually received in the slots 111. Each of the PTC heating plates 12 has an upper contact surface 121 and a lower contact surface 122 which are both exposed to the corresponding slot 111.

As shown in FIGS. 1-3, and 5, the first fin assembly 2 is disposed on one side of the PTC heating unit 1. The first fin assembly 2 comprises a first electrically conductive plate 21, a first thermally conductive plate 22, and a first wavy fin 23. The first electrically conductive plate 21 is attached to the PTC heating unit 1. That is, the upper contact surface 121 is attached to the first electrically conductive plate 21; the first wavy fin 23 is clamped firmly between the first electrically conductive plate 21 and the first thermally conductive plate 22.

As shown in FIGS. 1-3, and 5, the second fin assembly 3 is disposed on the other side of the PTC heating unit 1. The second fin assembly 3 comprises a second electrically conductive plate 31, a second thermally conductive plate 32, and a second wavy fin 33. The second electrically conductive plate 31 is attached to the PTC heating unit 1. That is, the lower contact surface 122 is attached to the second electrically conductive plate 31; the second wavy fin 33 is clamped firmly between the second electrically conductive plate 31 and the second thermally conductive plate 32.

As shown in FIGS. 1-3, the first electrode plate 4 extends integrally from the first electrically conductive plate 21 and is electrically connected to the PTC heating unit 1. The detailed description is given below. The first electrode plate 4 extends integrally from one end of the first electrically conductive plate 21 which is made of aluminum or copper.

As shown in FIGS. 1-3, the second electrode plate 5 extends integrally from the second electrically conductive plate 31 and is electrically connected to the PTC heating unit 1. The further explanation is given below. The second electrode plate 5 extends integrally from one end of the second electrically conductive plate 31 which is made of aluminum or copper.

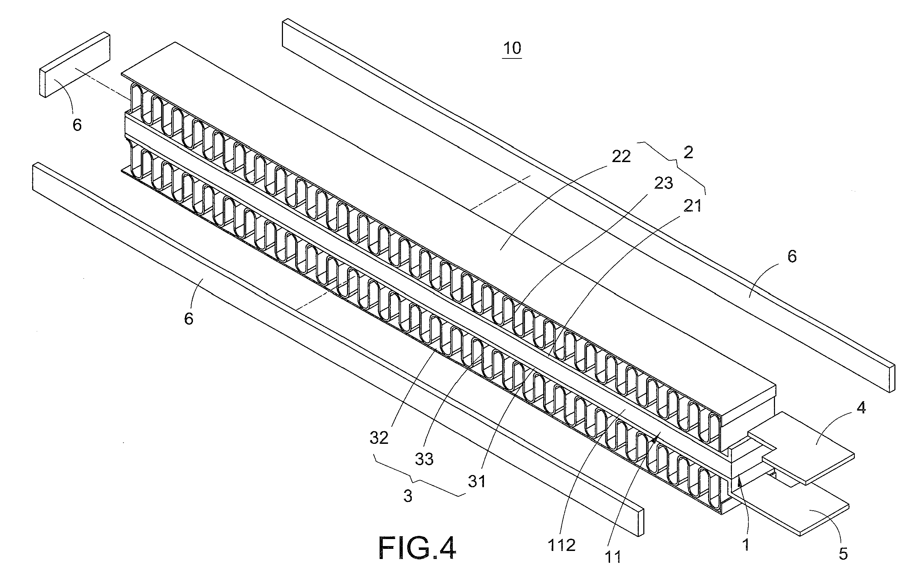

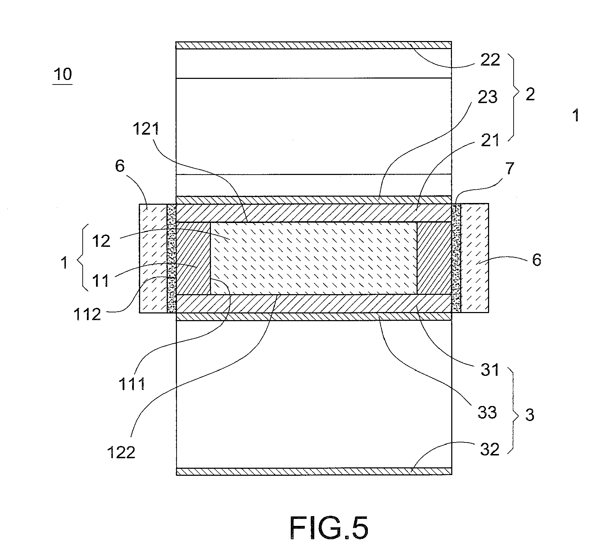

As shown in FIGS. 4 and 5, the integrally formed heater 10 of the present invention further comprises a plurality of ceramic devices 6 and a thermally conductive adhesive 7. Each of the ceramic devices 6 is attached to and covers an external wall 112 of the holder 11. The thermally conductive adhesive 7 is applied between the external wall 112 and the ceramic devices 6. The thermally conductive adhesive 7 comprises one of plastic, silicone, Teflon, polyamide, epoxy, ceramic powder, and a combination thereof.

Besides, the number of the ceramic devices 6 of the present invention is preferably three. The three ceramic devices 6 are individually attached to three sides of the external wall 112, but not limited to this.

As shown in FIGS. 1-3, the assembly of the integrally formed heater 10 of the present invention is as follows: The first fin assembly 2 is disposed on one side of the PTC heating unit 1. The first fin assembly 2 has the first electrically conductive plate 21 which is attached to the PTC heating unit 1. The second fin assembly 3 is disposed on the other side of the PTC heating unit 1. The second fin assembly 3 has a second electrically conductive plate 31 which is attached to the PTC heating unit 1. The first electrode plate 4 extends integrally from the first electrically conductive plate 21 and is electrically connected to the PTC heating unit 1. The second electrode plate 5 extends integrally from the second electrically conductive plate 31 and is electrically connected to the PTC heating unit 1. Thus, the first electrode plate 4 is formed integrally with the first fin assembly 2; the second electrode plate 5 is formed integrally with the second fin assembly 3. As a result, the integrally formed heater 10 has the features of low cost, simple assembly, reduced impedance, and stable structure.

As shown in FIGS. 1-5, which show the integrally formed heater 10 in an operating state. Because the first electrode plate 4 extends integrally from the first electrically conductive plate 21 and the second electrode plate 5 extends integrally from the second electrically conductive plate 31, the connection between the first electrode plate 4 and the first fin assembly 2 and the connection between the second electrode plate 5 and the second fin assembly 3 are both performed by integral forming, traditional replacing riveting or welding, which avoids the problems of poor bonding, increased impedance, high cost, and complex assembly such that the integrally formed heater 10 has the features of low cost, simple assembly, reduced impedance, and stable structure.

Moreover, the integrally formed heater 10 of the present invention further comprises a plurality of ceramic devices 6 and a thermally conductive adhesive 7. The ceramic devices 6 are individually attached to and cover the external wall 112 of the holder 11. The thermally conductive adhesive 7 is applied between the external wall 112 and the ceramic devices 6. Because the ceramic devices 6 and the thermally conductive adhesive 7 have the properties of electrical insulation and thermal insulation, the ceramic devices 6 and the thermally conductive adhesive 7 can effectively confine the power supplies of the first electrode plate 4 and the second electrode plate 5 to the PTC heating plates 12. As a result, the current leakage in the integrally formed heater 10 can be prevented and thus the operation safety of the integrally formed heater 10 can be enhanced.

## Claims

1. An integrally formed heater (10), comprising:
a PTC heating unit (1);
a first fin assembly (2) disposed on one side of the PTC heating unit (1), wherein the first fin assembly (2) has a first electrically conductive plate (21) attached to the PTC heating unit (1);
a second fin assembly (3) disposed on the other side of the PTC heating unit (1), wherein the second fin assembly (3) has a second electrically conductive plate (31) attached to the PTC heating unit (1);
a first electrode plate (4) extending integrally from the first electrically conductive plate (21) and electrically connected to the PTC heating unit (1); and
a second electrode plate (5) extending integrally from the second electrically conductive plate (31) and electrically connected to the PTC heating unit (1).

2. The integrally formed heater (10) according to claim 1, wherein the first fin assembly (2) further comprises a first thermally conductive plate (22) and a first wavy fin (23), wherein the first wavy fin (23) is clamped firmly between the first electrically conductive plate (21) and the first thermally conductive plate (22), wherein the first electrode plate (4) extends integrally from one end of the first electrically conductive plate (21).

3. The integrally formed heater (10) according to claim 2, wherein the second fin assembly (3) further comprises a second thermally conductive plate (32) and a second wavy fin (33), wherein the second wavy fin (33) is clamped firmly between the second electrically conductive plate (31) and the second thermally conductive plate (32), wherein the second electrode plate (5) extends integrally from one end of the second electrically conductive plate (31).

4. The integrally formed heater (10) according to claim 1, wherein the first electrically conductive plate (21) and the second thermally conductive plate (32) are made of aluminum or copper.

5. The integrally formed heater (10) according to claim 2 or claim 3, wherein the PTC heating unit (1) comprises a holder (11) and a plurality of PTC heating plates (12), wherein the holder (11) is provided with a plurality of slots (111), wherein the PTC heating plates (12) are individually received in the slots (111), wherein each of the PTC heating plates (12) has an upper contact surface (121) and a lower contact surface (122) which are both exposed to the corresponding slot (111), wherein the upper contact surface (121) is attached to the first electrically conductive plate (21) and the lower contact surface (122) is attached to the second electrically conductive plate (31).

6. The integrally formed heater (10) according to claim 5, further comprising a plurality of ceramic devices (6) and a thermally conductive adhesive (7), wherein the ceramic devices (6) are attached to and cover an external wall (112) of the holder (11), wherein the thermally conductive adhesive (7) is applied between the external wall (112) and the ceramic devices (6).

7. The integrally formed heater (10) according to claim 6, wherein the thermally conductive adhesive (7) comprises one of plastic, silicone, Teflon, polyamide, epoxy, ceramic powder, and a combination thereof.
